# EUROPEAN PATENT SPECIFICATION

(11) **EP 2 661 043 B1**
(45) Date of publication and mention of the grant of the patent: **04.10.2017**
(21) Application number: 11854360.2
(22) Date of filing: 26.08.2011
(51) Int. Cl.: H04L 29/06

(54) **IP MULTIMEDIA SUBSYSTEM AND METHOD THEREOF FOR RESTORING USER SUBSCRIPTION RELATIONSHIP**
IP-MULTIMEDIA-SUBSYSTEM UND ENTSPRECHENDES VERFAHREN ZUR WIEDERHERSTELLUNG VON BENUTZER-SUBSKRIPTIONS-BEZIEHUNG
SOUS-SYSTÈME MULTIMÉDIA IP ET SON PROCÉDÉ DE RESTAURATION DE RELATION D'ABONNEMENT D'UTILISATEUR

(30) Priority: 27.12.2010 CN 201010607712
(43) Date of publication of application: 06.11.2013
(73) Proprietor: ZTE Corporation, Shenzhen, Guangdong 518057 (CN)
(72) Inventor: CUI, Pisuo, Shenzhen Guangdong518057 (CN); LU, Jianfeng, Shenzhen Guangdong 518057 (CN); LIANG, Bin, Shenzhen Guangdong 518057 (CN)
(74) Representative: Platzöder, Michael Christian
(86) International application number: PCT/CN2011/078968
(87) International publication number: WO 2012/088907

(56) References cited:
- WO-A1-2010/000314
- CN-A- 101 102 607
- CN-A- 101 355 442
- US-A1- 2009 191 870

## Description

### Technical Field

The present document relates to the field of communication technology, and particularly, to an IP multimedia subsystem and method thereof for restoring a user subscription relationship.

### Background of the Related Art

An IP Multimedia Subsystem (IMS) is a standard of the next generation network defined by the Third Generation Partnership Project (3GPP), an outstanding feature of the IMS is to use a Session Initiation Protocol (SIP) hierarchy in which communication is unrelated to access and possess a capability of converging various services, which conforms to a development tendency of convergence of the communication network.

Presence (PRS) is a kind of service capability, it permits a user to release his/her own Presence information, permits the user to query Presence information of another user, or notifies the user of a change of the subscribed information after the Presence information of another user is changed by successfully subscribing the Presence information of another user.

In the current practical applications, a client (also called as a Watcher, e.g., a user equipment) can subscribe the Presence information according to a subscription list (RLS) configured by itself, and a Presence Server can send subscription notification message (Notify) with respect to the subscription event. However, since communication is required to be performed between the client and the presence server through multiple network elements, there exists a possibility of losing the Notify or a Notify response, and there also exists a possibility that a certain network element returns an incorrect response due to an abnormity error. Meanwhile, since a subscription belongs to session-type message, after a session ends when the Notify is failed, the related subsequent changes cannot be notified, which will cause a great impact and an extremely worse experience on the user using the services, for example, a friend of one's own has been online apparently, but a client of one's own displays that the friend is still offline.

The document US2009191870A1 discloses network-based device, method and computer readable medium associated with an IP Multimedia Sub-system for providing registration alerts in the IMS system. The method embodiment includes detecting a predetermined event associated with a registration state associated with all of a user's registrations in the IMS and transmitting a notification to a user which reports the occurrence of the predetermined event. The method may also include taking an action relative to the user's registration state in the IMS system based on the user interaction with the notification.

The document WO2010000314A1 discloses a method of handling notifications associated with a presence service provided over a communications network and to which service a plurality of users are subscribed. The method comprises subscribing a first user to presence information of one or more peer users. In the event that a notification is sent from said network towards a first user, the notification containing presence information relating to the or at least one of said peer users, any failure to deliver said notification is detected and the notification sent one or more times.

Therefore, in a subscription process of the IP multimedia subsystem, after a server sends subscription notification message (Notify) to a client unsuccessfully, how to restore a user subscription relationship becomes a technical problem required to be solved.

### Summary of the Invention

The object of the present document is to provide an IP multimedia subsystem and method thereof for restoring a user subscription relationship, which is used for solving the problem of how to restore the subscription relationship after a server sends subscription notification message unsuccessfully to a client in a user subscription process in the IP multimedia subsystem.

In order to solve the above problem, the present document provides a method for restoring a user subscription relationship in an IP multimedia subsystem, which comprises:
a client initiating a subscription request to a server after making a successful registration, and the server sending subscription notification message to the client after receiving the subscription request;
after sending the subscription notification message, if acquiring that the sent subscription notification message is sent unsuccessfully, the server sending instant message to the client to notify that the subscription notification message is sent unsuccessfully; and
after receiving the instant message and acquiring that the subscription notification message is sent unsuccessfully, the client re-initiating a subscription request to the server.

Subscription objects in the subscription request initiated by the client comprise: friend state information, and/or subscribed information, and/or registration state information.

The method further comprises: the server acquiring that the sent subscription notification message is sent unsuccessfully by the following way: not receiving a response returned by the client after sending the subscription notification message, or receiving a non-2XX response.

The server configures a threshold value of a number of times of sending the instant message; the method further comprises: if the number of times of sending the instant message reaches the configured threshold value, the server deleting user subscription information, signing out the client, and giving an alarm to an administrator; and if the number of times of sending the instant message does not reach the configured threshold value, the server continuing to send the instant message to notify the client that the subscription notification message is sent unsuccessfully.

The server refers to a server which can process a subscription request in IP multimedia subsystem services, which comprises: a presence server, a group management server and an instant message server;
the client refers to a user equipment, which comprises devices such as a computer, a mobile phone and a Personal Digital Assistant (PDA).

The present document further provides an IP Multimedia Subsystem (IMS), which comprises: a client, a server and an IMS core network, wherein the client interacts with the server through the IMS core network, wherein:
the client is configured to: initiate a subscription request to the server after making a successful registration;
the server is configured to: send subscription notification message to the client after receiving the subscription request, and after sending the subscription notification message, if acquiring that the sent subscription notification message is sent unsuccessfully, send instant message to the client to notify the client that the subscription notification message is sent unsuccessfully; and
the client is further configured to: after receiving the instant message and acquiring that the subscription notification message is sent unsuccessfully, re-initiate a subscription request to the server.

Subscription objects in the subscription request initiated by the client comprise: friend state information, and/or subscribed information, and/or registration state information.

The server is further configured to acquire that the sent subscription notification message is sent unsuccessfully by the following way: not receiving a response returned by the client after sending the subscription notification message, or receiving a non-2XX response.

The server configures a threshold value of a number of times of sending the instant message; the server is further configured to: if the number of times of sending the instant message reaches the configured threshold value, delete user subscription information, sign out the client, and give an alarm to an administrator; and if the number of times of sending the instant message does not reach the configured threshold value, continue to send the instant message to notify the client that the subscription notification message is sent unsuccessfully.

The server refers to a server which can process the subscription request in IP multimedia subsystem services, which comprises: a presence server, a group management server and an instant message server;
the client refers to a user equipment, which comprises devices such as a computer, a mobile phone and a Personal Digital Assistant (PDA).

With the IP multimedia subsystem and method thereof for restoring the user subscription relationship in the present document, after sending the subscription notification message unsuccessfully, the server can notify the client that the subscription notification message is sent unsuccessfully by sending the instant message (Message); and the client can subsequently re-initiate the subscription request to restore subscriptions of the related objects, thereby improving the user experience and enhancing the use effect of users.

### Brief Description of Drawings

Here, the described accompanying drawings are used to provide a further understanding of the present document and constitute a part of the present document. The schematic examples and illustrations thereof of the present document are used to explain the present document, but do not constitute an inappropriate limitation on the present document. In the drawings:
FIG. 1 is a schematic diagram of a user performing login and registration, subscription and notification in IMS services in the related art.
FIG. 2 is a schematic diagram of an IMS used for restoring the user subscription and an interaction thereof in the example of the present document.
FIG. 3 is a flow diagram of restoring a subscription session after subscription notification message used for notifying a client is sent unsuccessfully in the example of the present document.
FIG. 4 is a schematic diagram of signaling interaction of restoring a subscription session after a presence server notifies a user equipment that the subscription notification message is sent unsuccessfully in a specific application scenario according to the example of the present document.

### Preferred Embodiments of the Invention

In order to make the object, technical scheme and advantages of the present document more clear, the present document will be further described in detail in combination with the accompanying drawings below. It should be noted that the preferred examples provided below are used to provide a comprehensive and thorough understanding of the present document, but do not constitute any limitation on the present document.

In the technical scheme of the present document, a main idea used for restoring a subscription session is:
After acquiring that subscription notification message sent to a client is sent unsuccessfully, a server (e.g., a Presence Server (PS)) initiates and sends instant message (Message) to the client (also called as a watcher, e.g., a user equipment) after deleting the session, notifies the client that the subscription session is failed through the instant message, and wishes that the client restores the session to re-establish a subscription relationship. This enables a user to eliminate a grave consequence that the client cannot acquire the subscription notification message (Notify) information as soon as possible after the server sends subscription notification message (Notify) unsuccessfully.

Said server refers to a server which can process a subscription request in IMS services. In the IMS services, the server is normally a presence server, a group management server or an instant message server and so on, with regard to all the service servers, if there exists certain information needing to be notified to the client in real time, they will support a subscription function and can perform restoring with respect to the subscription request according to the present document.

The client refers to the user equipment, which includes but is not limited to devices such as a computer, a mobile phone and a Personal Digital Assistant (PDA) and so on. In these devices, all those which can access an IMS network and can perform communication through a standard communication protocol can be regarded as the clients of the present document. The communication protocol can be a Session Initiation Protocol (SIP) or an XML Configuration Access Protocol (XCAP).

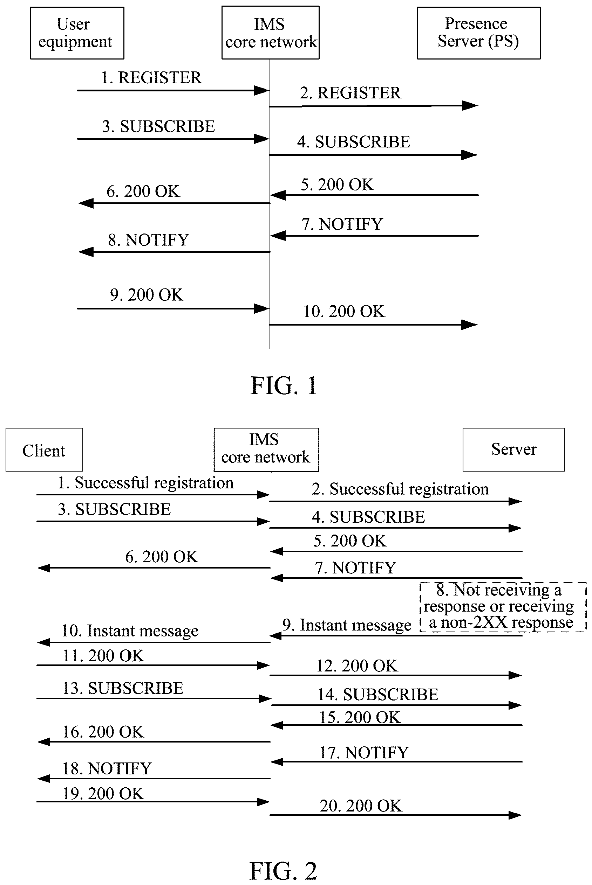

As shown in FIG. 2, in the example of the present document, an IP multimedia subsystem is provided, which is used for restoring a user subscription relationship. The IP multimedia subsystem includes a client, a server and an IMS core network. The client communicates with the server through the IMS core network, the client is an instant messaging client, it can be a customized terminal, and it can communicates with severs such as a presence server or other service servers and so on through a standard protocol.

In the IP multimedia subsystem, the client initiates a registration request and initiates a subscription request after making a successful registration, the server returns a success response after receiving the subscription request and sends subscription notification message (Notify) at the meantime;
after acquiring that the subscription notification message (Notify) is sent unsuccessfully, the server sends instant message (Message) to the client to notify the client that the sent subscription notification message (Notify) is sent unsuccessfully.

Furthermore, after receiving the instant message (Message) and acquiring that the subscription notification message (Notify) is sent unsuccessfully, the client re-sends a new subscription request.

Wherein, subscription objects in the subscription request include: friend state information, subscribed information and/or registration state information and so on.

Wherein, the server acquiring that the subscription notification message (Notify) is sent unsuccessfully refers to: after sending the subscription notification message (Notify), the server not receiving a response returned by the client, or receiving a non-2XX response.

Furthermore, a threshold value of the number of times of sending the instant message (Message) notification can be set, which is used for limiting an upper limit of the number of times of sending. If a user stands in the registration period, when the number of times of the server sending the instant message (Message) notification does not reach the specified threshold value, the instant message (Message) can be sent; and when the number of times of the server sending the instant message (Message) notification reaches the specified threshold value, the flow ends, and the Message will not be sent any more.

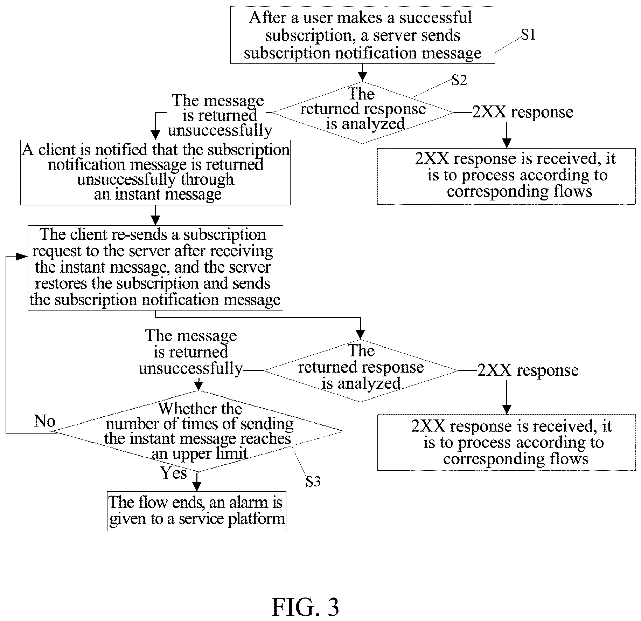

As shown in FIG. 3, a method for notifying a client that subscription notification message (Notify) is sent unsuccessfully in the example of the present document includes the following steps.

In step S1, the client initiates a registration request and initiates a subscription request after making a successful registration, a server returns a success response after receiving the subscription request and sends relevant information of subscription notification message (Notify) to the client at the meantime; wherein, subscription objects include: friend state information, subscribed information and/or registration state information and so on.

In step S2, after sending the subscription notification message (Notify), if acquiring that the subscription notification message (Notify) is sent unsuccessfully (that is, not receiving a Notify response returned by the client, or receiving a non-2XX response), the server deletes a session and sends instant message (Message) to the client to notify the client that the sent subscription notification message (Notify) is sent unsuccessfully; and the client re-sends a subscription request according to the relevant information after receiving the Message.

Wherein, that the subscription notification message (Notify) is sent unsuccessfully may be caused by the Notify timeout or by that the non-2XX response such as a 3XX response, 4XX response or 5XX response is received, which is required to be processed according to relevant descriptions of error processing flow provided by the relevant protocols, and this is not an issue of concern in the present document, which will not be repeated here.

Wherein, after the client re-initiates the subscription, the server re-sends subscription notification message (Notify); if a subscription notification message (Notify) notification is sent successfully this time, the client can continue to keep the subscription session; and if the notification is still sent unsuccessfully this time, it is required to re-execute the current step until the number of times of sending the Message reaches an upper limit of the permitted number of times of sending. Here, the upper limit of the number of times of sending the Message is specified by the service side.

In step S3, if a user stands in the registration period, when the number of times of the server sending the Message notification does not reach the specified upper limit value, it returns to step S2 and continues to send the Message; and if the number of times of the server sending the Message notification reaches the specified upper limit value, the flow ends.

Furthermore, if a user stands in the registration period, when the number of times of the server sending the Message reaches the specified upper limit value, a notification to the client is abandoned, user subscription information is deleted, the client is signed out, and an alarm is given to an administrator.

At the point, the server can choose to prohibit the user to log in and also can choose to only delete the subscription session. If the subscription session is deleted only, the client cannot obtain the change notification of the subscription information of this time later. The upper limit value of the permitted number of times of sending the Message notification is decided by the service side in the IMS.

Through the above technical scheme about the IMS and the IMS restoring the subscription relationship, after sending the Notify unsuccessfully, the server notifies the client that the Notify is failed by sending the Message, and the client can subsequently re-initiate the subscription request to restore subscriptions of the related objects, thereby improving the user experience and enhancing the use effect of users.

A further description will be made through an application example of using a presence server as the server below.

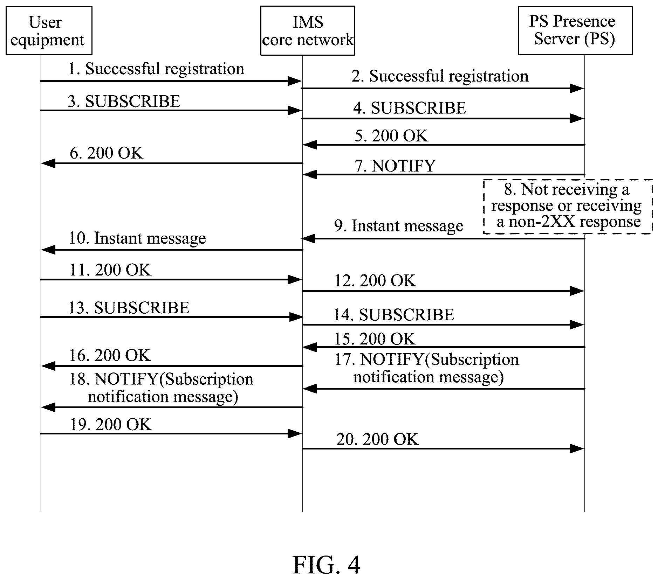

FIG. 4 is a flow diagram of restoring a subscription session after a Notify is failed in an IMS in which a presence server serves as the server.

An IP multimedia subsystem shown in FIG. 4 is used for restoring a user subscription relationship, the IP multimedia subsystem includes a User Equipment (UE), a presence server and an IMS core network. The user equipment communicates with the presence server through the IMS core network, the user equipment is an instant messaging client, it can be a customized terminal, and it can communicate with the presence server or other service servers through a standard protocol.

In the IP multimedia subsystem, the UE initiates a registration request and initiates a subscription request after making a successful registration, the presence server returns a success response after receiving the subscription request and sends relevant information of subscription notification message (Notify) at the meantime;
after acquiring that the subscription notification message (Notify) is sent unsuccessfully, the presence server sends Message to the user equipment to notify that the subscription notification message (Notify) is sent unsuccessfully.

Furthermore, after receiving the Message and acquiring that the subscription notification message (Notify) is sent unsuccessfully, the user equipment re-sends a new subscription request.

Wherein, subscription objects include but are not limited to: friend state information, subscribed information and/or registration state information and so on.

Wherein, the presence server acquiring that the Notify is sent unsuccessfully refers to: after sending the Notify, the presence server not receiving a response returned by the user equipment, or receiving a non-2XX response.

Furthermore, an upper limit value of the number of times of sending the Message notification can be set. If a user stands in the registration period, when the number of times of the server sending the Message notification does not reach the specified upper limit value, the Message can be sent; and when the number of times of the server sending the Message notification reaches the specified upper limit value, the flow ends, and the Message will not be sent any more.

Based on the IP multimedia subsystem shown in FIG. 4, a method for the presence server notifying the user equipment that the subscription notification message (Notify) is sent unsuccessfully includes the following steps.

First of all, the User Equipment (UE) initiates a registration request and initiates a subscription request after making a successful registration, the presence server returns a success response after receiving the subscription request and sends relevant information of the Notify at the meantime; wherein, subscription objects include: friend state information, subscribed information and/or registration state information and so on.

Then, after sending the Notify, if acquiring that the Notify is sent unsuccessfully (that is, not receiving a Notify response returned by the user equipment, or receiving a non-2XX response), the presence server deletes a session and sends Message to the user equipment to notify the user equipment that the sent Notify is sent unsuccessfully; and the user equipment re-sends a new subscription request according to the relevant information after receiving the Message.

Wherein, that the Notify is sent unsuccessfully may be caused by the Notify timeout or by that a 3XX response, 4XX response or 5XX response is received, which is required to be processed according to relevant descriptions of error processing flow provided by the relevant protocols, and this is not an issue of concern in the present document, which will not be repeated here.

Wherein, after the user equipment re-initiates the subscription, the server re-sends Notify message; if the Notify is sent successfully this time, the user equipment can continue to keep the subscription session; and if the notification is still unsuccessful this time, it is required to re-execute the current step until the number of times of sending the Message reaches an upper limit of the permitted number of times of sending. The upper limit of the number of times of sending the Message is specified by the service side.

At last, if a user stands in the registration period, when the number of times of the presence server sending the Message notification does not reach the specified upper limit value, it returns to the second step and continues to send the Message; and if the number of times of the presence server sending the Message notification reaches the specified upper limit value, the flow ends.

Furthermore, if a user stands in the registration period, when the number of times of the presence server sending the Message reaches the specified upper limit value, a notification to the user equipment is abandoned, user subscription information is deleted, the client is signed out, and an alarm is given to an administrator. At the point, the presence server can choose to prohibit the user to log in and also can choose to only delete the subscription session. If the subscription session is deleted only, the client cannot obtain the change notification of the subscription information of this time later. The upper limit value of the permitted number of times of sending the Message notification is decided by the service side in the IMS.

Through the above technical scheme about the IMS and the IMS restoring the subscription relationship, after sending the Notify unsuccessfully, the presence server notifies a watcher that the Notify is failed by sending the Message, and the user equipment can subsequently re-initiate the subscription request to restore subscriptions of the related objects, thereby improving the user experience and enhancing the use effect of users.

In the IMS shown in FIG. 4, a flow below is illustrated: the user equipment makes a successful registration and a successful subscription, however the presence server sends the Notify unsuccessfully, then the presence server sends the Message notification, and the user equipment re-initiates the subscription, the presence server re-sends the Notify.

Each detailed signaling flow in FIG. 4 is described as follows.
A. In step 1-step 2, the user equipment completes a registration in the IMS core network, and the core network completes a third party registration in the presence server.
B. In step 3-step 6, the user equipment sends a subscription, and the presence server returns a subscription success response.
C. In step 7-step 8, the presence server sends Notify message, but does not receive a corresponding response, that is, the Notify is sent unsuccessfully.
D. In step 9-step 12, the presence server sends a Message request and notifies the user equipment of the Message request, and the user equipment returns a response.
E. In step 13-step 16, the user equipment re-sends a subscription, and the presence server returns a subscription success response.
F. In step 17-step 20, the presence server re-sends Notify message and receives a success response.

### Industrial Applicability

Compared with the related art, in the present document, after sending the subscription notification message unsuccessfully, the server can notify the client that the subscription notification message is sent unsuccessfully by sending the instant message (Message); and the client can subsequently re-initiate the subscription request to restore subscriptions of the related objects, thereby improving the user experience and enhancing the usage effect of users.

## Claims

1. A method for restoring a user subscription relationship in an Internet Protocol, IP, Multimedia Subsystem, IMS, comprising:
a client initiating a subscription request to a server after making a successful registration, and the server sending a subscription notification message to the client after receiving the subscription request (S1);
after sending the subscription notification message, if acquiring that the sent subscription notification message is sent unsuccessfully, the server sending an instant message to the client to notify that the subscription notification message is sent unsuccessfully (S2); and
after receiving the instant message and acquiring that the subscription notification message is sent unsuccessfully, the client re-initiating a subscription request to the server.

2. The method according to claim 1, wherein,
subscription objects in the subscription request initiated by the client comprise: friend state information, and/or subscribed information, and/or registration state information.

3. The method according to claim 1, further comprising:
the server acquiring that the sent subscription notification message is sent unsuccessfully by the following way: not receiving a response returned by the client after sending the subscription notification message, or receiving a non-2XX response.

4. The method according to claim 1, wherein, the server configures a threshold value of a number of times of sending the instant message (S3);
the method further comprises: if the number of times of sending the instant message reaches the configured threshold value, the server deleting user subscription information, signing out the client, and giving an alarm to an administrator; and
if the number of times of sending the instant message does not reach the configured threshold value, the server continuing to send the instant message to notify the client that the subscription notification message is sent unsuccessfully.

5. The method according to any one of claims 1 to 4, wherein,
the server refers to a server which can process a subscription request for IMS services, which comprises: a presence server, a group management server and an instant message server;
the client refers to a user equipment, which comprises devices such as a computer, a mobile phone and a personal digital assistant.

6. An Internet Protocol, IP, Multimedia Subsystem, IMS, comprising: a client, a server and an IMS core network, wherein the client interacts with the server through the IMS core network, wherein:
the client is configured to: initiate a subscription request to the server after making a successful registration;
the server is configured to: send a subscription notification message to the client after receiving the subscription request, and after sending the subscription notification message, if acquiring that the sent subscription notification message is sent unsuccessfully, send an instant message to the client to notify the client that the subscription notification message is sent unsuccessfully; and
the client is further configured to: after receiving the instant message and acquiring that the subscription notification message is sent unsuccessfully, re-initiate a subscription request to the server.

7. The IP multimedia subsystem according to claim 6, wherein,
subscription objects in the subscription request initiated by the client comprise: friend state information, and/or subscribed information, and/or registration state information.

8. The IP multimedia subsystem according to claim 6, wherein,
the server is further configured to acquire that the sent subscription notification message is sent unsuccessfully by the following way: not receiving a response returned by the client after sending the subscription notification message, or receiving a non-2XX response.

9. The IP multimedia subsystem according to claim 6, wherein, the server is configured to configure a threshold value of a number of times of sending the instant message;
the server is further configured to: if the number of times of sending the instant message reaches the configured threshold value, delete user subscription information, sign out the client, and give an alarm to an administrator; and
if the number of times of sending the instant message does not reach the configured threshold value, continue to send the instant message to notify the client that the subscription notification message is sent unsuccessfully.

10. The IP multimedia subsystem according to any one of claims 6 to 9, wherein,
the server refers to a server which can process a subscription request for IMS services, which comprises: a presence server, a group management server and an instant message server;
the client refers to a user equipment, which comprises devices such as a computer, a mobile phone and a personal digital assistant.

## Patentansprüche

1. Verfahren zum Wiederherstellen einer Benutzersubskriptionsbeziehung in einem Internetprotokoll-, IP, -Multimediasubsystem, IMS, aufweisend:
Auslösen, durch einen Client nach Durchführung einer erfolgreichen Registrierung, einer Subskriptionsanfrage an einen Server, und Senden, durch den Server nach dem Empfang der Subskriptionsanfrage, einer Subskriptionsmitteilungsnachricht an den Client (S1);
nach dem Senden der Subskriptionsmitteilungsnachricht, Senden, durch den Server, einer Sofortnachricht, Instant Message, an den Client, um diesen davon zu informieren, dass die Subskriptionsmitteilungsnachricht nicht erfolgreich gesendet wurde, wenn festgestellt wird, dass die Subskriptionsmitteilungsnachricht nicht erfolgreich gesendet wurde (S2); und
erneutes Auslösen einer Subskriptionsanfrage an den Server, durch den Client, nachdem die Sofortnachricht empfangen und festgestellt wurde, dass die Subskriptionsmitteilungsnachricht nicht erfolgreich gesendet wurde.

2. Verfahren gemäß Anspruch 1, wobei Subskriptionsobjekte in der durch den Client ausgelösten Subskriptionsanfrage aufweisen: Freundschaftsstatusinformationen und/oder abonnierte Informationen und/oder Registrierungszustandsinformationen.

3. Verfahren gemäß Anspruch 1, des Weiteren aufweisend:
Feststellen, durch den Server, dass die gesendete Subskriptionsmitteilungsnachricht nicht erfolgreich gesendet wurde auf die folgende Weise: ausbleibendes -Empfangen einer nach dem Senden der Subskriptionsmitteilungsnachricht von dem Client zurückgesendeten Antwort, oder Empfangen einer Nicht-2XX Antwort.

4. Verfahren gemäß Anspruch 1, wobei
der Server einen Schwellenwert bezüglich der Anzahl der Zeitpunkte an denen die Sofortnachricht gesendet wurde, konfiguriert (S3);
das Verfahren des Weiteren aufweist: wenn die Anzahl der der Zeitpunkte, an denen die Sofortnachricht gesendet wurde, den konfigurierten Schwellenwert erreicht, Löschen von Benutzersubskriptionsinformationen, Abmelden des Clients und Auslösen eines Alarms an einen Administrator, jeweils durch den Server; und wenn die Anzahl der Zeitpunkte, an denen die Sofortnachricht gesendet wurde, den konfigurierten Schwellenwert nicht erreicht, fortfahren damit, durch den Server die Sofortnachricht wiederholt zu senden, um den Client davon zu informieren, dass die Subskriptionsmitteilungsnachricht nicht erfolgreich gesendet wurde.

5. Verfahren gemäß einem der Ansprüche 1 bis 4, wobei es sich bei dem Server um einen Server handelt, der eine Subskriptionsanfrage für IMS-Dienste verarbeiten kann und der aufweist: einen Präsenzserver, einen Gruppenverwaltungsserver und einen Sofortnachrichtenserver;
es sich bei dem Client um ein Benutzerendgerät handelt, das Vorrichtungen in der Art eines Computers, eines Mobiltelefons oder eines persönlichen digitalen Assistenten aufweist.

6. Internetprotokoll-, IP, -Multimediasubsystem, IMS, aufweisend:
einen Client, einen Server und ein IMS Kernnetzwerk wobei der Client mit dem Server über das IMS Kernnetzwerk interagiert, wobei:
der Client konfiguriert ist zum:
Auslösen einer Subskriptionsanfrage an den Server nach Durchführung einer erfolgreichen Registrierung;
der Server konfiguriert ist zum:
Senden einer Subskriptionsmitteilungsnachricht an den Client nach dem Empfang der Subskriptionsanfrage, und
nach dem Senden der Subskriptionsmitteilungsnachricht und wenn festgestellt wird, dass die Subskriptionsmitteilungsnachricht nicht erfolgreich gesendet wurde, Senden einer Sofortnachricht, Instant Message, an den Client, um diesen davon zu informieren, dass die Subskriptionsmitteilungsnachricht nicht erfolgreich gesendet wurde; und
der Client des Weiteren konfiguriert ist zum: erneuten Auslösen einer Subskriptionsanfrage an den Server, nachdem die Sofortnachricht empfangen und festgestellt wurde, dass die Subskriptionsmitteilungsnachricht nicht erfolgreich gesendet wurde.

7. IP-Multimediasubsystem gemäß Anspruch 6, wobei Subskriptionsobjekte in der durch den Client ausgelösten Subskriptionsanfrage aufweisen: Freundschaftsstatusinformationen und/oder abonnierte Informationen und/oder Registrierungszustandsinformationen.

8. IP-Multimediasubsystem gemäß Anspruch 6, wobei der Server des Weiteren konfiguriert ist zum Feststellen, auf die folgende Weise, dass die gesendete Subskriptionsmitteilungsnachricht nicht erfolgreich gesendet wurde: ausbleibendes Empfangen einer nach dem Senden der Subskriptionsmitteilungsnachricht von dem Client zurückgesendeten Antwort, oder Empfangen einer Nicht-2XX Antwort.

9. IP-Multimediasubsystem gemäß Anspruch 6, wobei der Server konfiguriert ist zum Konfigurieren eines Schwellenwerts bezüglich der Anzahl der Zeitpunkte, an denen die Sofortnachricht gesendet wurde;
wobei der Server des Weiteren konfiguriert ist:
wenn die Anzahl der Zeitpunkte, an denen die Sofortnachricht gesendet wurde, den konfigurierten Schwellenwert erreicht, zum Löschen von Benutzersubskriptionsinformationen, Abmelden des Clients und Auslösen eines Alarms an einen Administrator; und
wenn die Anzahl der Zeitpunkte, an denen die Sofortnachricht gesendet wurde, den konfigurierten Schwellenwert nicht erreicht, zum Fortfahren damit, die Sofortnachricht wiederholt zu senden, um den Client davon zu informieren, dass die Subskriptionsmitteilungsnachricht nicht erfolgreich gesendet wurde.

10. IP-Multimediasubsystem gemäß einem der Ansprüche 6 bis 9, wobei es sich bei dem Server um einen Server handelt, der eine Subskriptionsanfrage für IMS-Dienste verarbeiten kann und der aufweist: einen Präsenzserver, einen Gruppenverwaltungsserver und einen Sofortnachrichtenserver;
es sich bei dem Client um ein Benutzerendgerät handelt, das Vorrichtungen in der Art eines Computers, eines Mobiltelefons oder eines persönlichen digitalen Assistenten aufweist.

## Revendications

1. Procédé de restauration d'une relation de souscription utilisateur dans un sous-système multimédia, IMS, à protocole Internet, IP, comprenant :
l'initiation par un client d'une demande de souscription à un serveur après s'être enregistré avec succès, et l'envoi par le serveur d'un message de notification de souscription au client après la réception de la demande de souscription (S1) ;
après l'envoi du message de notification de souscription, s'il est acquis que le message de notification de souscription envoyé n'est pas envoyé avec succès, l'envoi par le serveur d'un message instantané au client pour indiquer que le message de notification de souscription n'est pas envoyé avec succès (S2) ; et
après la réception du message instantané et le fait qu'il est acquis que le message de notification de souscription n'est pas envoyé avec succès, l'initiation à nouveau par le client d'une demande de souscription au serveur.

2. Procédé selon la revendication 1, dans lequel,
les objets de souscription dans la demande de souscription initiée par le client comprennent : des informations d'état d'ami, et/ou des informations souscrites, et/ou des informations d'état d'enregistrement.

3. Procédé selon la revendication 1, comprenant en outre :
l'acquisition par le serveur que le message de notification de souscription envoyé n'est pas envoyé avec succès de la manière suivante : non-réception d'une réponse renvoyée par le client après l'envoi du message de notification de souscription, ou réception d'une réponse non-2XX.

4. Procédé selon la revendication 1, dans lequel, le serveur configure une valeur seuil d'un nombre d'envoi du message instantané (S3) ;
le procédé comprend en outre : si le nombre d'envoi du message instantané atteint la valeur seuil configurée, la suppression par le serveur des informations de souscription utilisateur, la déconnexion du client, et l'envoi d'une alarme à un administrateur ; et
si le nombre d'envoi du message instantané n'atteint pas la valeur seuil configurée, la poursuite de l'envoi par le serveur du message instantané pour indiquer au client que le message de notification de souscription n'est pas envoyé avec succès.

5. Procédé selon l'une quelconque des revendications 1 à 4, dans lequel,
le serveur fait référence à un serveur qui peut traiter une demande de souscription pour des services IMS, qui comprend : un serveur de présence, un serveur de gestion de groupe et un serveur de message instantané ;
le client fait référence à un équipement utilisateur, qui comprend des dispositifs tels qu'un ordinateur, un téléphone mobile et un assistant numérique personnel.

6. Sous-système multimédia, IMS, à protocole Internet, IP, comprenant : un client, un serveur et un réseau central IMS, dans lequel le client interagit avec le serveur par l'intermédiaire du réseau central IMS, dans lequel :
le client est configuré pour : initier une demande de souscription au serveur après s'être enregistré avec succès ;
le serveur est configuré pour : envoyer un message de notification de souscription au client après la réception de la demande de souscription, et après l'envoi du message de notification de souscription, s'il est acquis que le message de notification de souscription envoyé n'est pas envoyé avec succès, envoyer un message instantané au client pour indiquer au client que le message de notification de souscription n'est pas envoyé avec succès ; et
le client est configuré en outre pour : après la réception du message instantané et le fait qu'il est acquis que le message de notification de souscription n'est pas envoyé avec succès, initier à nouveau une demande de souscription au serveur.

7. Sous-système multimédia IP selon la revendication 6, dans lequel,
les objets de souscription dans la demande de souscription initiée par le client comprennent : des informations d'état d'ami, et/ou des informations souscrites, et/ou des informations d'état d'enregistrement.

8. Sous-système multimédia IP selon la revendication 6, dans lequel,
le serveur est configuré en outre pour acquérir que le message de notification de souscription envoyé n'est pas envoyé avec succès de la manière suivante : non-réception d'une réponse renvoyée par le client après l'envoi du message de notification de souscription, ou réception d'une réponse non-2XX.

9. Sous-système multimédia IP selon la revendication 6, dans lequel, le serveur est configuré pour configurer une valeur seuil d'un nombre d'envoi du message instantané ;
le serveur est configuré en outre pour : si le nombre d'envoi du message instantané atteint la valeur seuil configurée, supprimer les informations de souscription utilisateur, déconnecter le client, et envoyer une alarme à un administrateur ; et
si le nombre d'envoi du message instantané n'atteint pas la valeur seuil configurée, poursuivre l'envoi du message instantané pour indiquer au client que le message de notification de souscription n'est pas envoyé avec succès.

10. Sous-système multimédia IP selon l'une quelconque des revendications 6 à 9, dans lequel,
le serveur fait référence à un serveur qui peut traiter une demande de souscription pour des services IMS, qui comprend : un serveur de présence, un serveur de gestion de groupe et un serveur de message instantané ;
le client fait référence à un équipement utilisateur, qui comprend des dispositifs tels qu'un ordinateur, un téléphone mobile et un assistant numérique personnel.
